# FASCICULE DE BREVET EUROPEEN

(11) **EP 3 175 530 B1**
(45) Date de publication et mention de la délivrance du brevet: **16.05.2018**
(21) Numéro de dépôt: 15738734.1
(22) Date de dépôt: 23.06.2015
(51) Int. Cl.: H02J 7/02, B60L 11/18, H02M 1/42, H02K 1/24

(54) **CHARGEUR ET PROCÉDÉ DE CHARGE DE BATTERIE DE VÉHICULE AUTOMOBILE ÉLECTRIQUE OU HYBRIDE A MACHINE A RELUCTANCE VARIABLE A DOUBLE SAILLANCE**
LADEGERÄT UND VERFAHREN ZUM LADEN DER BATTERIE EINES ELEKTRO- ODER HYBDRIDMOTORFAHRZEUGS MIT EINEM DOPPELT HERVORSTEHENDEN VARIABLEN RELUKTANZMOTOR
CHARGER AND METHOD FOR CHARGING THE BATTERY OF AN ELECTRIC OR HYBRID MOTOR VEHICLE WITH A DOUBLY SALIENT VARIABLE RELUCTANCE MACHINE

(30) Priorité: 01.08.2014 FR 1457524
(43) Date de publication de la demande: 07.06.2017
(73) Titulaire: Renault s.a.s, 92100 Boulogne-Billancourt (FR)
(72) Inventeur: GASCHER, Alain, 92310 Sevres (FR); SADARNAC, Daniel, 87110 Solignac (FR); SAKR, Nadim, 75014 Paris (FR)
(86) Numéro de dépôt international: PCT/FR2015/051665
(87) Numéro de publication internationale: WO 2016/016529

(56) Documents cités:
- EP-A1- 2 477 304
- US-A- 4 896 088
- US-A1- 2004 119 427
- LIANG JIANING ET AL: "A compact integrated switched reluctance motor drive with bridgeless PFC converter", 2013 IEEE ENERGY CONVERSION CONGRESS AND EXPOSITION, IEEE, 15 septembre 2013 (2013-09-15), pages 4719-4724, XP032516628, DOI: 10.1109/ECCE.2013.6647334
- J Liang ET AL: "ANALYSIS OF ELECTROMAGNETIC BEHAVIOR IN SWITCHED RELUCTANCE MOTOR FOR THE APPLI- CATION OF INTEGRATED AIR CONDITIONER ON- BOARD CHARGER SYSTEM", Progress In Electromagnetics Research, 1 janvier 2012 (2012-01-01), pages 347-364, XP055179551, Extrait de l'Internet: URL:http://www.jpier.org/PIER/pier124/21.1 1112501.pdf [extrait le 2015-03-26]
- YUN-HONG ZHENG ET AL: "Study on Operation of Switched Reluctance Motor for Electric Vehicles Based on FPGA", INFORMATION MANAGEMENT, INNOVATION MANAGEMENT AND INDUSTRIAL ENGINEERING, 2009 INTERNATIONAL CONFERENCE ON, IEEE, PISCATAWAY, NJ, USA, 26 décembre 2009 (2009-12-26), pages 512-516, XP031594001, ISBN: 978-0-7695-3876-1
- HUNG-CHUN CHANG ET AL: "A battery powered switched-reluctance motor drive established using three-phase power module", POWER ELECTRONICS AND DRIVE SYSTEMS, 2009. PEDS 2009. INTERNATIONAL CONFERENCE ON, IEEE, PISCATAWAY, NJ, USA, 2 novembre 2009 (2009-11-02), pages 643-648, XP031614601, DOI: 10.1109/PEDS.2009.5385864 ISBN: 978-1-4244-4166-2
- HUNG-CHUN CHANG ET AL: "Development of a Compact Switched-Reluctance Motor Drive for EV Propulsion With Voltage-Boosting and PFC Charging Capabilities", IEEE TRANSACTIONS ON VEHICULAR TECHNOLOGY, IEEE SERVICE CENTER, PISCATAWAY, NJ, US, vol. 58, no. 7, 1 septembre 2009 (2009-09-01), pages 3198-3215, XP011267845, ISSN: 0018-9545, DOI: 10.1109/TVT.2009.2017546

## Description

L'invention a pour domaine technique les chargeurs embarqués pour véhicules électriques, et plus particulièrement les chargeurs pour véhicules électriques munis d'une machine électrique à reluctance variable à double saillance.

Les véhicules électriques et hybrides rechargeables peuvent être motorisés de différentes façons. Toutefois, la grande simplicité de construction et la robustesse de la machine à reluctance variable à double saillance (acronyme « MRVDS », "Switched Reluctance Machine" en langue anglaise), font d'elle un candidat important pour ce type d'application.

Une telle machine est alimentée par un étage d'alimentation à découpage permettant d'alimenter les différents enroulements à partir de la tension fournie par la batterie. Un tel étage d'alimentation comprend généralement un onduleur dont les transistors sont pilotés par un moyen de commande.

De plus, une partie des véhicules électriques et hybrides actuels comprennent un chargeur embarqué permettant une recharge aisée en tous lieux. De l'état de la technique, on connaît les documents suivants.

Le document WO 2010103063A1 décrit un chargeur embarqué permettant la charge de la batterie à partir d'un réseau d'alimentation monophasé ou triphasé. Toutefois ce chargeur n'est pas adapté pour une machine à réluctance. De plus, il présente des perturbations en mode commun élevées ce qui nécessite l'emploi d'un filtre d'entrée coûteux. De plus, le redresseur utilisé lors de la charge n'est pas utilisé en mode traction et ne participe donc pas à l'amélioration du groupe motopropulseur.

Les documents WO 2010057892 et WO 2010057893 décrivent un chargeur dont la structure comprend une base de trois ponts en H symétrique plus coûteuse qu'une structure en demi-pont asymétrique nécessaire dans le cas d'une machine à réluctance. Ce chargeur est conçu pour être utilisé sur des machines à aimants permanents ou à rotor bobiné et n'est pas adapté pour une machine à réluctance. Dans le cas d'une machine à réluctance, la circulation des courants dans les enroulements statoriques générerait un mouvement vibratoire du rotor à une fréquence de 50Hz s'avérant gênant.

L'article "A compact integrated switched reluctance motor drive with bridgeless PFC converter" de Liang Jianing et al., propose un groupe motopropulseur à machine à réluctance dans lequel le convertisseur utilisé pour faire fonctionner la machine à réluctance est utilisé comme convertisseur également lors de la charge de la batterie de traction.

L'article « Analysis of electromagnetic behavior in switched reluctance motor for the application of integrated air conditionner on-board charger system» de Liang Jianing et al., propose également de réutiliser le convertisseur visant à faire fonctionner une machine à reluctance dans un convertisseur de charge, avec une commande à zéro couple de la machine.

La présente invention a pour but de proposer un chargeur et un procédé de charge de la batterie haute tension du véhicule électrique ou hybride utilisant des éléments de la chaîne de traction d'un tel véhicule. Le chargeur comprenant les caractéristiques de la revendication 1 et le procédé comprenant les caractéristiques de la revendication 11 permettent de pallier les inconvénients précités.

L'invention a pour objet un chargeur de batterie de véhicule automobile électrique ou hybride muni d'une machine électrique à reluctance variable à double saillance alimentée par une batterie.

La machine à reluctance comprend des dents munies d'enroulements au stator et des pôles rotoriques, également appelés dents, dépourvus de bobinage au rotor. Le chargeur de batterie comprend quant à lui des ponts comprenant chacun un premier transistor relié en série par son émetteur à une extrémité d'un premier enroulement de la machine à reluctance, l'autre extrémité du premier enroulement étant connectée à une extrémité d'un deuxième enroulement de la machine à reluctance, l'autre extrémité du deuxième enroulement étant connectée en série au collecteur d'un deuxième transistor, une première diode étant connectée par sa cathode au collecteur du premier transistor et par son anode au collecteur du deuxième transistor, une deuxième diode est connectée par sa cathode à l'émetteur du premier transistor et par son anode à l'émetteur du deuxième transistor. Chaque transistor est muni par ailleurs d'une diode de roue libre.

Le premier enroulement et le deuxième enroulement de chaque pont sont bobinés sur des dents diamétralement opposées du stator et peuvent être connectés en série ou en parallèle.

Les ponts sont connectés en parallèle de sorte que tous les collecteurs des premiers transistors soient connectés ensemble, tandis que tous les émetteurs des deuxièmes transistors sont connectés ensemble. De plus, les ponts sont connectés en parallèle avec un étage de conversion continu-continu et une batterie.

La machine à reluctance peut comprendre au moins dix dents au stator, et au moins cinq ponts le rotor étant symétrique.

La machine à reluctance peut comprendre douze enroulements au stator et huit pôles rotoriques au rotor, le chargeur de batterie pouvant comprendre quant à lui six ponts.

Le stator peut comprendre alors successivement le premier enroulement du premier pont, le premier enroulement du troisième pont, le premier enroulement du cinquième pont, le premier enroulement du deuxième pont, le premier enroulement du quatrième pont, le premier enroulement du sixième pont, le deuxième enroulement du premier pont, le deuxième enroulement du troisième pont, le deuxième enroulement du cinquième pont, le deuxième enroulement du deuxième pont, le deuxième enroulement du quatrième pont et le deuxième enroulement du sixième pont. On désigne comme point remarquable le point de connexion entre le premier enroulement et le deuxième enroulement dudit pont, les points remarquables des ponts pouvant être deux à deux reliés à un connecteur apte à recevoir une phase d'un réseau d'alimentation électrique. Au sens de la présente demande, « relié » ou « connecté » signifie aussi bien « relié directement » c.-à-d. en court-circuit sans élément intermédiaire que « relié indirectement » c.-à-d. via un élément intermédiaire.

Lorsque le chargeur de batterie est connecté à un réseau d'alimentation électrique monophasé,
soit les points remarquables du premier pont et du deuxième pont comportant les enroulements qui correspondent à une position de conjonction lors de cette charge peuvent être connectés à la phase du réseau d'alimentation électrique monophasé, les points remarquables du troisième pont et du cinquième pont étant connectés au neutre du circuit d'alimentation électrique monophasé,
soit les points remarquables du premier pont et du deuxième pont comportant les enroulements qui correspondent à une position de conjonction lors de cette charge peuvent être connectés à la phase du réseau d'alimentation électrique monophasé, les points remarquables du quatrième pont et du sixième pont étant connectés au neutre du circuit d'alimentation électrique monophasé.

Dans une variante, le chargeur peut comprendre une première diode connectée aux collecteurs des premiers transistors par sa cathode et par son anode à la cathode d'une deuxième diode, l'anode de la deuxième diode étant reliée aux émetteurs des deuxièmes transistors. Lorsque un tel chargeur de batterie est connecté à un réseau d'alimentation électrique monophasé, l'anode de la première diode et la cathode de la deuxième diode peuvent être aptes à être connectées au neutre du réseau d'alimentation électrique, et, lesdits points remarquables du premier pont et du deuxième pont comportant les enroulements qui correspondent à une position de conjonction lors de cette charge ou lesdits points remarquables du troisième pont et du cinquième pont ou lesdits points remarquables du quatrième pont et du sixième sont connectés à la phase du réseau d'alimentation électrique monophasé. Lorsque le chargeur de batterie est connecté à un réseau d'alimentation électrique triphasé,
soit les points remarquables du premier pont et du deuxième pont comportant les enroulements qui correspondent à une position de conjonction lors de cette charge sont connectés à la première phase du réseau d'alimentation électrique, les points remarquables du troisième pont et du cinquième pont étant connectés à la deuxième phase du réseau d'alimentation électrique, les points remarquables du quatrième pont et du sixième pont étant connectés à la troisième phase du réseau d'alimentation électrique,
soit les points remarquables du premier pont et du deuxième pont comportant les enroulements qui correspondent à une position de conjonction lors de cette charge sont connectés à la première phase du réseau d'alimentation électrique, les points remarquables du troisième pont et du sixième pont étant connectés à la deuxième phase du réseau d'alimentation électrique, les points remarquables du quatrième pont et du cinquième pont étant connectés à la troisième phase du réseau d'alimentation électrique.

La connexion entre des points remarquables des ponts peut être réalisée par l'intermédiaire d'un court-circuit.

La connexion entre les points remarquables des ponts peut être réalisée par l'intermédiaire d'un interrupteur.

La connexion entre les points remarquables des ponts peut être réalisée par l'intermédiaire d'une prise clipsable.

Les transistors des ponts peuvent être commandés par l'intermédiaire d'une commande unipolaire.

Les transistors des ponts peuvent être commandés par l'intermédiaire d'une commande bipolaire.

L'invention a également pour objet un procédé de charge d'une batterie de véhicule automobile muni d'une machine électrique à reluctance variable à double saillance alimentée par une batterie par un chargeur tel que décrit ci-dessus. Le procédé comprend les étapes suivantes :
on positionne le rotor dans une position de conjonction dans laquelle quatre pôles du rotor équidistants les uns des autres sont alignés en face de quatre enroulements du stator également équidistants les uns des autres,
on connecte les points remarquables deux à deux de sorte que la résultante des forces électromagnétiques générées par les courants circulants ou induits dans les enroulements du stator soit sensiblement nulle, notamment en fonction du réseau d'alimentation électrique de sorte que les efforts tangentiels sur le rotor soient nuls, et
on commande les transistors afin de charger la batterie.

Un tel chargeur présente l'avantage de supprimer le mouvement du rotor lors de la charge de la batterie lorsque les phases de la machine électrique sont utilisées comme inductances de lissage. Une telle mise en mouvement du rotor poserait des problèmes à la fois de confort et de sécurité même si le véhicule est équipé d'un système de blocage mécanique ou de découplage du train de la machine lors de la charge.

Il présente également l'avantage d'utiliser un pont en H incomplet, également nommé asymétrique. Il ne requiert pas de rajout d'électronique de puissance pour le mode chargeur. En d'autres termes, il ne nécessite pas l'ajout d'un redresseur, si on estime qu'un étage élévateur de tension (en langue anglaise « Boost ») est déjà présent et réversible pour améliorer le mode traction. Un tel étage élévateur de tension améliore le mode traction en réalisant une stabilisation de la tension de l'onduleur sur toute la plage d'état de charge (acronyme anglais « SOC », pour « Stat Of Charge ») de la batterie et une adaptation à l'ensemble des batteries.

Un tel chargeur présente également l'avantage de ne pas nécessiter d'étage élévateur de tension réversible si la batterie a une tension minimum d'environ 650V et est chargée à partir d'un réseau d'alimentation triphasé 400Vrms.

Un tel chargeur présente l'avantage d'un mode commun sur la masse de la batterie quasiment nul.

Les avantages susmentionnés représentent une économie en composants.

Enfin, le chargeur est bidirectionnel si des ponts en H symétriques sont employés au lieu de ponts en H asymétriques.

Le chargeur présente également l'avantage de réutiliser la MRVDS et l'onduleur servant à son alimentation pour charger la batterie haute tension afin de présenter un coût et un encombrement réduit.

Il présente également l'avantage de limiter les déplacements du rotor lors de la charge sous l'effet de perturbations causées par l'utilisation des phases de la machine électrique comme inductances de lissage. Une telle mise en mouvement du rotor poserait des problèmes à la fois de confort et de sécurité même si le véhicule est équipé d'un système de blocage mécanique ou de découplage du train de la machine lors de la charge.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre la position des enroulements du stator et la position du rotor d'une machine à reluctance dans la position de conjonction A,
- la figure 2 illustre les principaux éléments d'un chargeur selon l'invention,
- la figure 3 illustre un premier mode de réalisation du chargeur,
- la figure 4 illustre un deuxième mode de réalisation du chargeur,
- la figure 5 illustre un troisième mode de réalisation du chargeur,
- la figure 5a illustre une prise clipsable entrant dans la réalisation du troisième mode de réalisation du chargeur,
- la figure 6 illustre le premier mode de réalisation du chargeur alimenté par un réseau d'alimentation triphasé,
- la figure 7 illustre les forces appliquées sur le rotor et le déplacement éventuellement engendré,
- la figure 8 illustre le premier mode de réalisation du chargeur alimenté par un réseau d'alimentation monophasé, et
- la figure 9 illustre un autre mode de réalisation du chargeur alimenté par un réseau d'alimentation monophasé.

La machine électrique considérée est une machine à réluctance variable à double saillance 12/8, c'est-à-dire à douze dents au stator et à huit dents au rotor. L'enseignement qui en découle peut être adapté à tout autre triplet [nombre de dents statoriques, nombre de dents rotoriques, nombre de ponts] de la machine à reluctance à condition que le nombre de dents statoriques soit supérieur à 10, le rotor soit symétrique et le nombre de ponts asymétriques soit supérieur à 5, soit le nombre de dents statoriques divisé par deux.

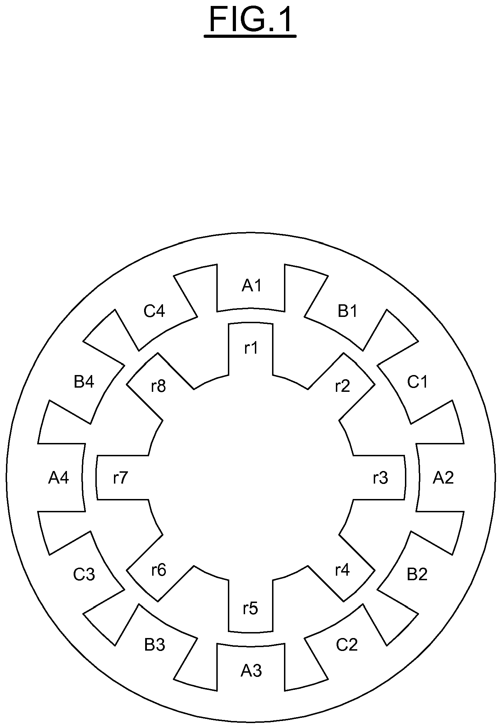

La figure 1 illustre la structure d'une telle machine. On peut voir les douze pôles du stator, référencés A1 à A4, B1 à B4 et C1 à C4. On peut également voir les huit pôles du rotor numérotés r1 à r8.

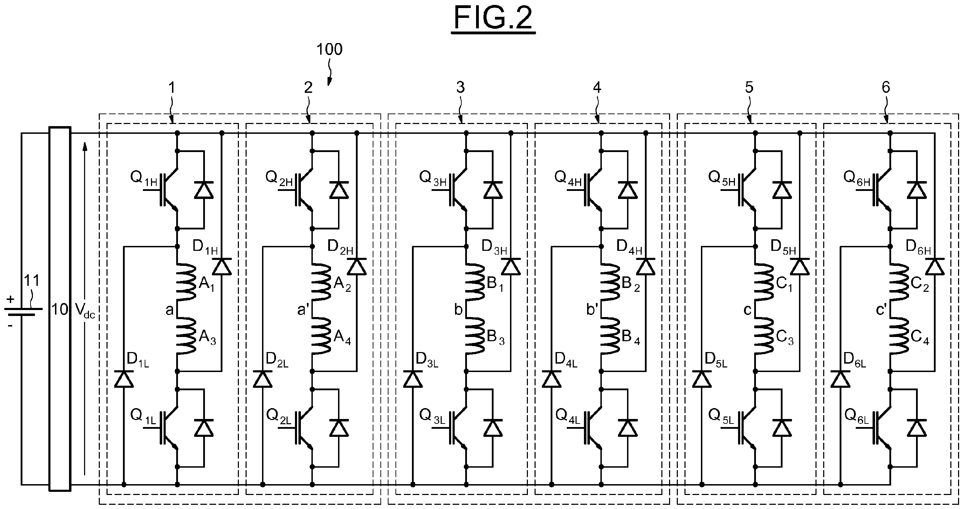

Vu que le couple produit par les machines à réluctance est proportionnel au carré du courant d'excitation et ne dépend donc pas du signe de ce courant, l'utilisation des onduleurs à courants unidirectionnels pour alimenter ces machines est privilégiée. La topologie la plus utilisée est une structure d'onduleur de tension en demi-pont asymétrique. Le schéma structurel d'un chargeur fonctionnant en mode « traction » est illustré par la figure 2. Le mode « traction » s'entend comme le mode de fonctionnement de la machine électrique dans lequel l'énergie circule de la batterie vers la machine électrique, afin de produire un couple moteur.

Sur la figure 2, on peut voir un onduleur référencé 100, comprenant six demi-ponts référencés 1 à 6 connectés à un étage 10 de conversion continu-continu assurant l'adaptation du niveau de tension du réseau d'alimentation à celui de la batterie 11. Les six ponts 1 à 6 présentent une structure similaire, et comprennent chacun un transistor dit haut relié en série par son émetteur à deux enroulements de la machine à reluctance connectés également en série, le deuxième enroulement étant connecté en série au collecteur d'un transistor dit bas. Une diode dite haute est connectée par sa cathode au collecteur du transistor haut et par son anode au collecteur du transistor bas. Une diode dite basse est connectée par sa cathode à l'émetteur du transistor haut et par son anode à l'émetteur du transistor bas. Les ponts sont connectés en parallèle de sorte que tous les collecteurs des transistors hauts soient connectés ensemble, tandis que tous les émetteurs des transistors bas sont connectés ensemble. Chaque transistor est muni d'une diode de roue libre. Pour chaque pont, un dit point remarquable est situé entre les deux enroulements de la machine à reluctance.

Comme on peut le voir, les différents enroulements du stator sont intégrés dans les ponts. Plus particulièrement, les enroulements (A₁ et A₃) sont connectés en série dans le pont 1; les enroulements (A₂ et A₄) dans le pont 2, (B₁ et B₃) dans le pont 3, (B₂ et B₄) dans le pont 4, (C₁ et C₃) dans le pont 5 et (C₂ et C₄) dans le pont 6. L'homme du métier comprendra à la lecture de la description suivante que d'autres combinaisons d'enroulements et de ponts peuvent être employées pour obtenir un effet similaire, la numérotation des ponts étant arbitraire.

En se référant de nouveau à la figure 1, on peut voir l'alignement des pôles du rotor r₁, r₃, r₅ et r₇ avec respectivement les pôles du stator A₁, A₂, A₃ et A₄. On notera dans la suite cette position par « position de conjonction A ». En commutant le courant électrique de la phase A à la phase C, les pôles rotoriques r₂, r₄, r₆ et r₈ s'alignent avec les pôles du stator C₁, C₂, C₃ et C₄. Le rotor tourne alors dans le sens horaire. Pour continuer la rotation dans le même sens, la séquence suivante est l'excitation de la phase B. En répétant les séquences d'alimentation des trois phases A, C, et B, la MRVDS tourne dans le même sens de rotation.

En se référant à nouveau à la figure 2, les ponts asymétriques (1) et (2) de la phase A sont pilotés de manière simultanée. Il en est de même pour (3) et (4) d'une part et pour (5) et (6) d'autre part. Si la phase A doit être alimentée, la fermeture des interrupteurs commandables (Q_{1H}, Q_{1L}) pour le pont asymétrique (1) (Q_{2H}, Q_{2L}) pour le pont asymétrique (2) conduit à l'application de la pleine tension continue Vdc aux bornes des enroulements (A₁+A₃) et (A₂+A₄) et la magnétisation de la phase A. Par ouverture des quatre interrupteurs commandables (Q_{1H}, Q_{1L}, Q_{2H}, Q_{2L}), l'énergie est restituée à la source via les diodes (D_{1H}, D_{1L}) d'une part et (D_{2H}, D_{2L}) d'autre part. Cela va faire diminuer le courant rapidement. Le cycle se répète en commandant l'ouverture et la fermeture des interrupteurs commandables (Q_{1H}, Q_{1L}) et (Q_{2H}, Q_{2L}).

Dans le cas d'une commande dite bipolaire, la tension aux bornes de la phase A est égale à une tension V_{dc} ou à une tension -V_{dc}. Toutefois, cela présente des inconvénients sous la forme de pertes par commutation supplémentaires dans les transistors. Ces inconvénients peuvent être réduits en appliquant une commande unipolaire. La tension aux bornes de la phase A est alors égale à une tension V_{dc}, une tension nulle ou à une tension - V_{dc}.

Le courant peut être régulé par l'intermédiaire d'une modulation de largeur d'impulsion (acronyme français « MLI », acronyme anglais « PWM » pour « Pulse Width Modulation ») ou par hystérésis.

On note qu'il n'y a aucun changement dans le fonctionnement de l'onduleur par rapport à un onduleur pour une machine à reluctance classique. Le fonctionnement de la MRVDS doit être autopiloté et les courants doivent être injectés relativement à la position du rotor.

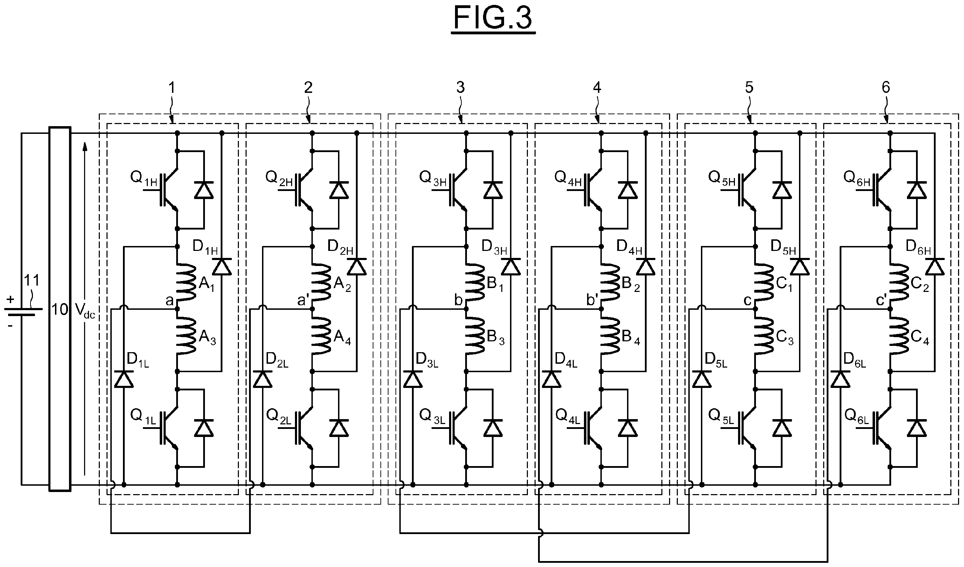

Le schéma de la figure 3 montre un cas où les noeuds a-a' sont connectés, de même que les noeuds b-c et b'-c', et ce dès la conception du chargeur en conjonction avec l'utilisation d'une commande bipolaire. Toutefois, ils ne peuvent alors pas être déconnectés pendant la traction. Cela n'a aucune influence sur le fonctionnement en traction si on emploie une commande bipolaire qui ne présente pas de phase de roue libre. La tension aux noeuds vaut V_{dc}/2 pendant la magnétisation ou la démagnétisation de la phase dans ce cas.

Le chargeur utilise l'onduleur et les bobinages de la machine électrique pour réaliser une conversion alternatif continu (AC/DC).

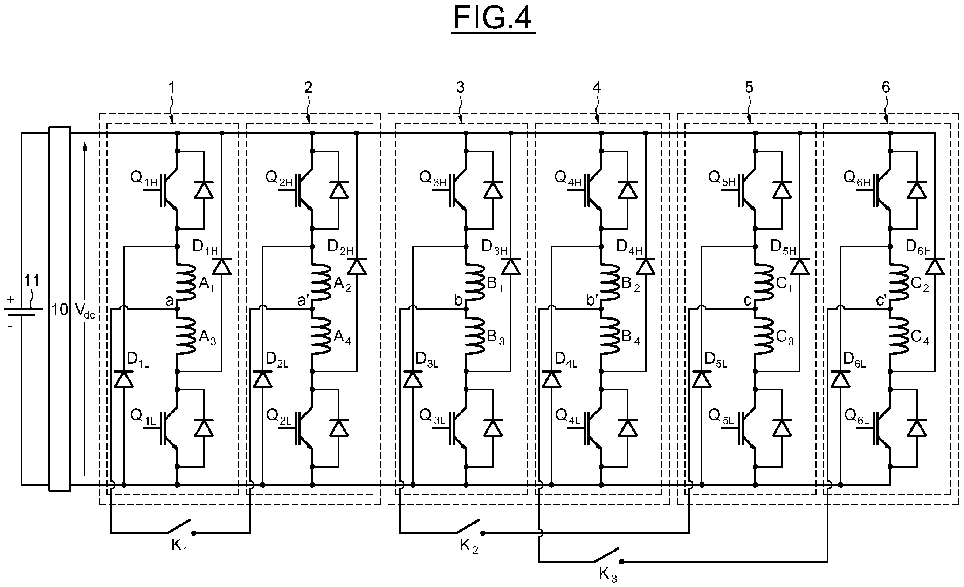

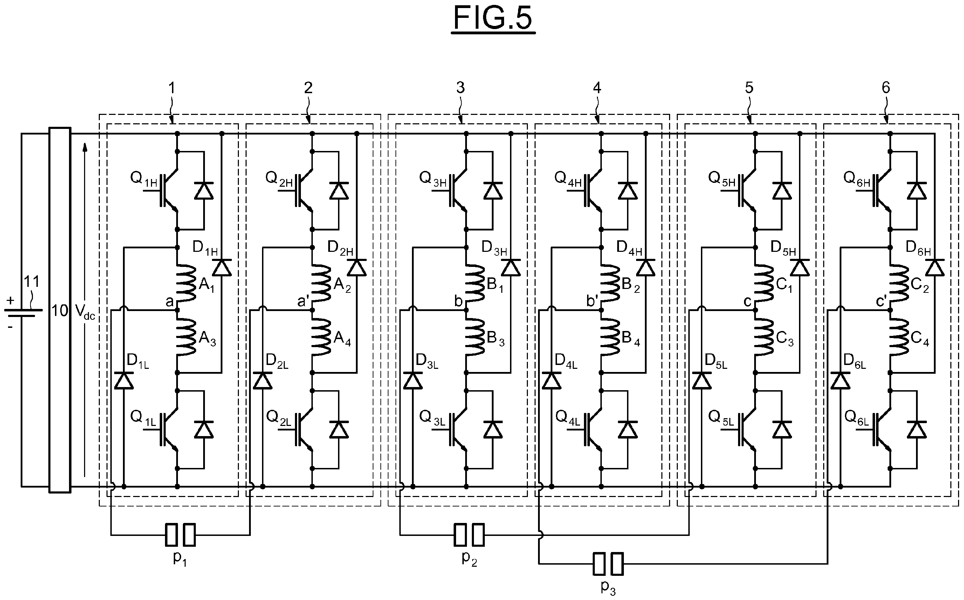

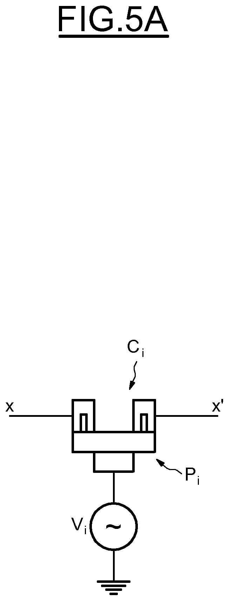

Comme mentionné précédemment, pendant la charge, les points (a,a'), (b,c) et (b',c') doivent être connectés de sorte à supprimer le mouvement du rotor lors de la charge lorsque les phases de la machine électrique sont utilisées comme inductances de lissage. Ces derniers sont soit maintenus connectés pendant la traction (figure 3) si une commande bipolaire est envisagée ou juste connectés pendant la charge dans le cas d'une commande unipolaire plus efficace (figure 4). Dans le mode de réalisation illustré par la figure 4, des interrupteurs K₁, K₂ et K₃ sont utilisés pour permettre de connecter les points (a,a'), (b,c) et (b',c') pendant la charge et de les déconnecter en traction. Le réseau d'alimentation électrique est connecté en amont ou en aval des interrupteurs K₁, K₂ et K₃. Dans le mode de réalisation illustré par la figure 5, des prises clipsables p₁, p₂ et p₃ sont utilisées pour connecter les points (a,a'), (b,c) et (b',c'). Sur la figure 5a illustrant une telle prise clipsable, on peut voir qu'elle comprend un connecteur fixe cᵢ solidaire du véhicule, destiné à recevoir une prise externe afin d'établir une connexion électrique. Plus précisément, une prise pᵢ est connectée à une source de tension alternative référencée ici Vᵢ. On déduira de cette représentation générale que différentes prises p₁, p₂, p₃ sont reliées chacune à une source de tension V₁, V₂, V₃. Une prise pi permet donc d'appliquer le même potentiel Vi aux deux connexions électriques (x,x') reliées au connecteur fixe cᵢ.

On pose qu'avant de commencer le processus de charge, le rotor est aligné sur « la position de conjonction A ». Cela implique une rotation angulaire négligeable au niveau de la roue.

Pour empêcher tout déplacement du rotor pendant la charge, la solution envisagée est de compenser les efforts tangentiels qui tendent à déplacer le rotor à droite ou à gauche de cette position d'équilibre.

Cette compensation est décrite plus en détails dans la suite de la description.

De plus, pour garantir un facteur de puissance unitaire et un taux de distorsion harmonique très faible, les courants absorbés du réseau électrique sont asservis de manière à suivre des consignes sinusoïdales en phase avec les tensions réseaux.

La structure décrite sur les figures 3 et 4 est adaptable à une alimentation par un réseau monophasé ou par un réseau triphasé. Dans le cas d'un réseau monophasé, on parle de charge lente tandis que l'on parle de charge rapide dans le cas d'un réseau triphasé.

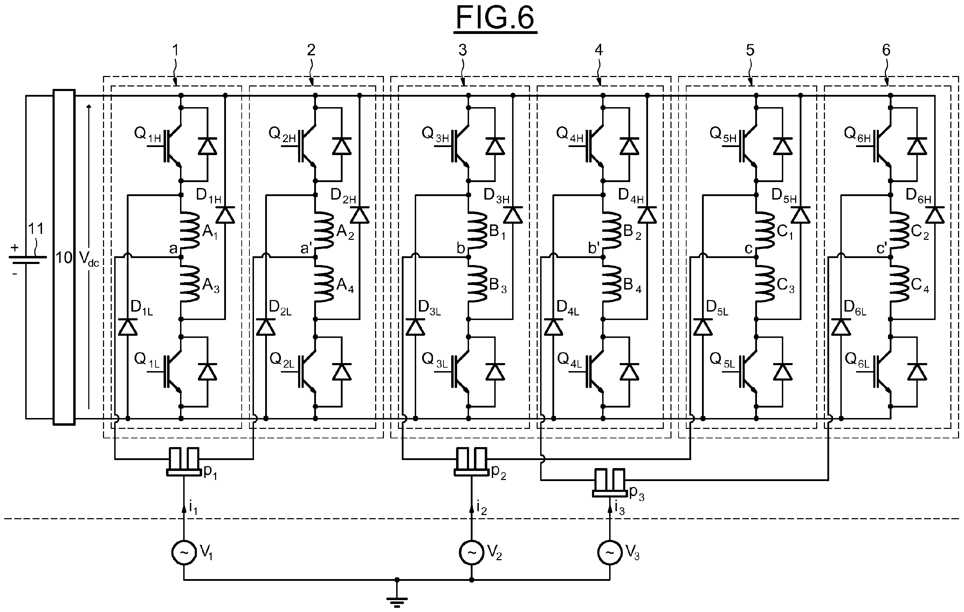

La Figure 6 montre le mode de raccordement sur un réseau triphasé dans le cas d'une charge « rapide ». Les points (a, a') sont connectés à la phase 1 du réseau électrique, les points (b, c) à la phase 2 et les points (b', c') à la phase 3. Le passage du courant dans la phase A comprenant les enroulements A₁, A₂, A₃ et A₄ induit un flux magnétique qui maintient le rotor dans sa position stable de conjonction. En particulier, le courant i₁ circule dans A₃ et A₄ si i₁ est positif ; et dans A₁ et A₂ si i₁ est négatif.

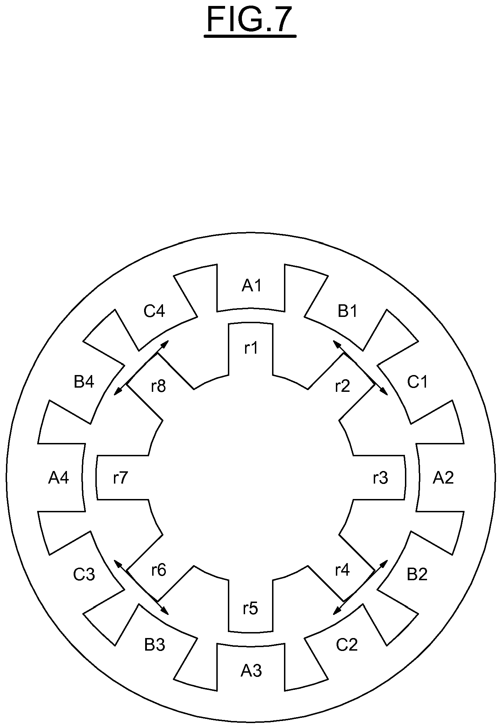

Si la phase B (comprenant les enroulements B₁, B₂, B₃ et B₄) et la phase C (comprenant les enroulements C₁, C₂, C₃ et C₄) sont parcourues par des courants différents, le rotor tend à se déplacer à droite ou à gauche en fonction de l'amplitude du courant traversant chaque phase. Cependant, si les phases B et C sont parcourues par le même courant, les forces tangentielles sont compensées et le rotor reste immobile dans sa position de conjonction A tel qu'illustré par la figure 7.

Cela est le cas dans la structure illustrée dans la figure 6 du fait de la connexion entre les points a et a', les points b et c et les points b' et c'. Dans un mode de réalisation alternatif, on peut obtenir une configuration de courants permettant de garder le rotor immobile dans la position de conjonction A en établissant une connexion entre les points a et a', les points b et c' et les points b' et c.

La commande utilisée est de type MLI identique à celle appliquée pour un redresseur triphasé classique à absorption sinusoïdale de courant.

L'alimentation des phases du stator décrite ci-dessus implique que les transistors Q_{1L} et Q_{2L} sont pilotés si le courant i₁ est positif, tandis que les transistors Q_{1H} et Q_{2H} sont pilotés dans le cas contraire. De même, les transistors Q_{3L} et Q_{5L} sont pilotés si le courant i₂ est positif, tandis que les transistors Q_{3H} et Q_{5H} sont pilotés si i₂ est négatif. Enfin, les transistors Q_{4L} et Q_{6L} sont pilotés si le courant i₃ est positif, tandis que les transistors Q_{4H} et Q_{6H} sont pilotés si i₃ est négatif.

Il faut noter aussi que l'utilisation des bobines de la machine comme décrit ici n'introduit pas un couplage entre les inductances d'une même phase.

Dans des modes de réalisation alternatifs, on emploie les modes de réalisation des figures 4 et 5, respectivement des interrupteurs et une prise clipsable, dans le cadre d'une charge alimentée par un réseau triphasé afin de ne connecter lesdits points remarquables du réseau que lors de la charge.

L'étage 10 de conversion continu-continu est optionnel en traction mais indispensable pendant la charge triphasée pour permettre d'adapter les tensions entre la sortie du chargeur fonctionnant comme un redresseur de type boost PFC (acronyme anglais pour « Power Factor Correction », « correction du facteur de puissance » en langue française) et la batterie 11 qui présente une tension bien inférieure de l'ordre de 400V. Le domaine des batteries étant en pleine évolution, si la tension de la batterie devient de l'ordre de 650V, soit deux fois supérieure à la valeur maximale de la tension phase-neutre du réseau d'alimentation 230Vrms, on pourra s'abstenir d'utiliser l'étage 10 de conversion continu-continu pendant la charge.

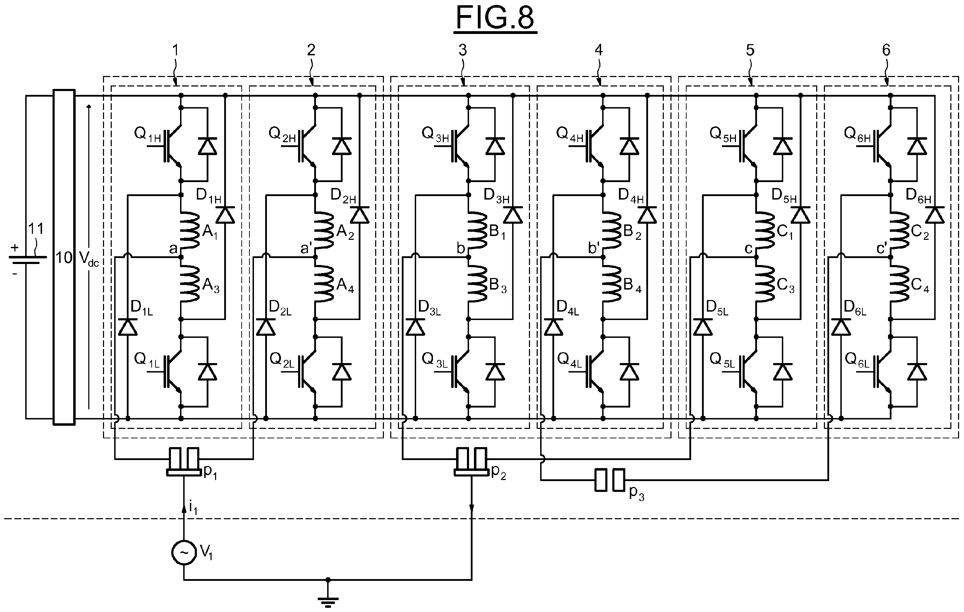

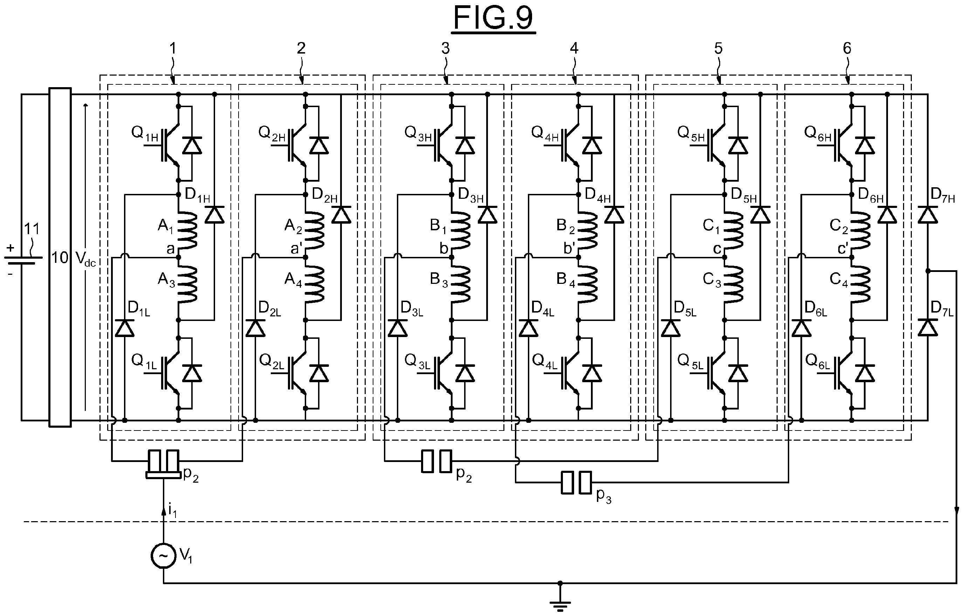

Les figures 8 et 9 illustrent la structure du chargeur alimenté par un réseau monophasé dans le cas d'une charge « lente ». La phase d'alimentation du réseau monophasé est connectée aux points milieux (a, a') de la phase A. Le neutre du réseau monophasé est connecté au couple de points (b, c). Ainsi, les ponts 4 et 6 ne sont pas commandés lors de la charge sur un réseau monophasé.

La figure 9 illustre un mode de réalisation alternatif, dans lequel le neutre est connecté au point milieu de deux diodes supplémentaires D_{7H} et D_{7L} connectées en parallèle de l'étage 10 de conversion continu-continu. L'ajout de ces deux diodes réduit les perturbations en mode commun au niveau de la batterie haute tension 11. Les ponts 3 à 6 ne sont pas commandés dans ce cas.

Le chargeur fonctionne alors comme un redresseur MLI bien connu de l'homme du métier sous le nom de « pseudo totem pole bridgeless boost pfc ». Le courant absorbé est sinusoïdal et en phase avec la tension du réseau d'alimentation électrique.

La commande utilisée pour les quatre ponts de ce chargeur est de type MLI comme pour un chargeur conventionnel qui utiliserait des inductances de lissage individuelles entre le réseau d'alimentation électrique et l'électronique de puissance. Le procédé de charge comprend ainsi une étape préliminaire d'alignement du rotor dans la position de concordance A, puis la connexion des points remarquables selon le réseau d'alimentation électrique, et la commande de la charge par l'intermédiaire des transistors.

## Revendications

1. Chargeur de batterie de véhicule automobile électrique ou hybride muni d'une machine électrique à reluctance variable à double saillance alimentée par une batterie (11), la machine à reluctance comprenant des enroulements (A1, B1, C1, A2, B2, C2, A3, B3, C3, A4, B4, C4) au stator et des pôles rotoriques (r1, r2, r3, r4, r5, r6, r7, r8), le chargeur de batterie comprenant des ponts comprenant chacun un premier transistor relié en série par son émetteur à une extrémité d'un premier enroulement (A1, A2, B1, B2, C1, C2) de la machine à reluctance, l'autre extrémité du premier enroulement étant connectée à une extrémité d'un deuxième enroulement (A3, A4, B3, B4, C3, C4) de la machine à reluctance, l'autre extrémité du deuxième enroulement étant connectée en série au collecteur d'un deuxième transistor, une première diode étant connectée par sa cathode au collecteur du premier transistor et par son anode au collecteur du deuxième transistor, une deuxième diode est connectée par sa cathode à l'émetteur du premier transistor et par son anode à l'émetteur du deuxième transistor,
le premier enroulement (A1, A2, B1, B2, C1, C2) et le deuxième enroulement (A3, A4, B3, B4, C3, C4) de chaque pont étant diamétralement opposés dans le stator,
chaque transistor étant muni d'une diode de roue libre,
les ponts étant connectés en parallèle de sorte que tous les collecteurs des premiers transistors soient connectés ensemble, tandis que tous les émetteurs des deuxièmes transistors sont connectés ensemble,
les ponts étant par ailleurs connectés en parallèle avec un étage (10) de conversion continu-continu et une batterie (11), la machine à reluctance comprenant au moins douze dents au stator, et au moins six ponts, le rotor étant symétrique, **caractérisé en ce que** chaque pont comprend un point remarquable (a, a', b, b', c, c') situé au point de connexion entre le premier enroulement et le deuxième enroulement dudit pont,
les points remarquables (a, a', b, b', c, c') des ponts étant deux à deux reliés à un connecteur (p1, p2, p3) apte à recevoir une phase d'un réseau d'alimentation électrique.

2. Chargeur de batterie selon la revendication 1, dans lequel la machine à reluctance comprend douze enroulements (A1, B1, C1, A2, B2, C2, A3, B3, C3, A4, B4, C4) au stator et huit pôles rotoriques (r1, r2, r3, r4, r5, r6, r7, r8), le chargeur de batterie comprend six ponts (1, 2, 3, 4, 5, 6),
le stator comprend successivement le premier enroulement (A1) du premier pont (1), le premier enroulement (B1) du troisième pont (3), le premier enroulement (C1) du cinquième pont (5), le premier enroulement (A2) du deuxième pont (2), le premier enroulement (B2) du quatrième pont (4), le premier enroulement (C2) du sixième pont (6), le deuxième enroulement (A3) du premier pont (1), le deuxième enroulement (B3) du troisième pont (3), le deuxième enroulement (C3) du cinquième pont (5), le deuxième enroulement (A4) du deuxième pont (2), le deuxième enroulement (B4) du quatrième pont (4) et le deuxième enroulement (C4) du sixième pont (6).

3. Chargeur de batterie selon la revendication 2, dans lequel lorsque le chargeur de batterie est connecté à un réseau d'alimentation électrique monophasé,
soit les points remarquables du premier pont (1) et du deuxième pont (2) comportant les enroulements qui correspondent à une position de conjonction lors de cette charge sont connectés à la phase du réseau d'alimentation électrique monophasé, les points remarquables du troisième pont (3) et du cinquième pont (5) étant connectés au neutre du circuit d'alimentation électrique monophasé, soit les points remarquables du premier pont (1) et du deuxième pont (2) comportant les enroulements qui correspondent à une position de conjonction lors de cette charge sont connectés à la phase du réseau d'alimentation électrique monophasé, les points remarquables du quatrième pont (3) et du sixième pont (6) étant connectés au neutre du circuit d'alimentation électrique monophasé.

4. Chargeur de batterie selon l'une quelconque des revendications 2 à 3, dans lequel une première diode est connectée aux collecteurs des premiers transistors par sa cathode et par son anode à la cathode d'une deuxième diode, l'anode de la deuxième diode étant reliée aux émetteurs des deuxièmes transistors, **caractérisé en ce que** lorsque le chargeur de batterie est connecté à un réseau d'alimentation électrique monophasé, l'anode de la première diode et la cathode de la deuxième diode sont aptes à être connectées au neutre du réseau d'alimentation électrique, et
les points remarquables du premier pont (1) et du deuxième pont (2) comportant les enroulements qui correspondent à une position de conjonction lors de cette charge ou les points remarquables du troisième pont (3) et du cinquième pont (5) ou les points remarquables du quatrième pont (4) et du sixième pont (6) sont connectés à la phase du réseau d'alimentation électrique monophasé.

5. Chargeur de batterie selon l'une quelconque des revendications 2 à 4, dans lequel lorsque le chargeur de batterie est connecté à un réseau d'alimentation électrique triphasé,
soit les points remarquables du premier pont (1) et du deuxième pont (2) comportant les enroulements qui correspondent à une position de conjonction lors de cette charge sont connectés à la première phase du réseau d'alimentation électrique, les points remarquables du troisième pont (3) et du cinquième pont (5) étant connectés à la deuxième phase du réseau d'alimentation électrique, les points remarquables du quatrième pont (4) et du sixième pont (6) étant connectés à la troisième phase du réseau d'alimentation électrique,
soit les points remarquables du premier pont (1) et du deuxième pont (2) comportant les enroulements qui correspondent à une position de conjonction lors de cette charge sont connectés à la première phase du réseau d'alimentation électrique, les points remarquables du troisième pont (3) et du sixième pont (6) étant connectés à la deuxième phase du réseau d'alimentation électrique, les points remarquables du quatrième pont (4) et du cinquième pont (5) étant connectés à la troisième phase du réseau d'alimentation électrique.

6. Chargeur de batterie selon l'une quelconque des revendications 2 à 5, dans lequel la connexion entre des points remarquables des ponts est réalisée par l'intermédiaire d'un court-circuit.

7. Chargeur de batterie selon l'une quelconque des revendications 2 à 5, dans lequel la connexion entre les points remarquables des ponts est réalisée par l'intermédiaire d'un interrupteur.

8. Chargeur de batterie selon l'une quelconque des revendications 2 à 5, dans lequel la connexion entre les points remarquables des ponts est réalisée par l'intermédiaire d'une prise clipsable.

9. Chargeur de batterie selon l'une quelconque des revendications précédentes, dans lequel les transistors des ponts sont commandés par l'intermédiaire d'une commande unipolaire.

10. Chargeur de batterie selon l'une quelconque des revendications 1 à 8, dans lequel les transistors des ponts sont commandés par l'intermédiaire d'une commande bipolaire.

11. Procédé de charge d'une batterie de véhicule automobile muni d'une machine électrique à reluctance variable à double saillance alimentée par une batterie (11) par un chargeur tel que revendiqué dans l'une quelconque des revendications 2 à 10, **caractérisé par le fait qu'**il comprend les étapes suivantes :
on positionne le rotor dans une position de conjonction dans laquelle quatre pôles du rotor équidistants les uns des autres sont alignés en face de quatre enroulements du stator également équidistants les uns des autres,
on connecte les points remarquables (a, a', b, b', c, c') deux à deux de sorte que la résultante des forces électromagnétiques générées par les courants circulants ou induits dans les enroulements du stator soit sensiblement nulle, notamment en fonction du réseau d'alimentation électrique de sorte que les efforts tangentiels sur le rotor soient nuls, et
on commande les transistors afin de charger la batterie.

## Patentansprüche

1. Batterieladegerät eines Elektro- oder Hybridkraftfahrzeugs, das mit einer elektrischen Maschine mit variabler Reluktanz mit doppelt ausgeprägten Polen ausgestattet ist, die von einer Batterie (11) gespeist wird, wobei die Reluktanzmaschine Wicklungen (A1, B1, C1, A2, B2, C2, A3, B3, C3, A4, B4, C4) am Stator und Rotorpole (r1, r2, r3, r4, r5, r6, r7, r8) umfasst, wobei das Batterieladegerät Brücken umfasst, die jeweils einen ersten Transistor umfassen, der über seinen Emitter mit einem Ende einer ersten Wicklung (A1, A2, B1, B2, C1, C2) der Reluktanzmaschine in Reihe geschaltet ist, wobei das andere Ende der ersten Wicklung mit einem Ende einer zweiten Wicklung (A3, A4, B3, B4, C3, C4) der Reluktanzmaschine verbunden ist, wobei das andere Ende der zweiten Wicklung mit dem Kollektor eines zweiten Transistors in Reihe geschaltet ist, wobei eine erste Diode über ihre Kathode mit dem Kollektor des ersten Transistors und über ihre Anode mit dem Kollektor des zweiten Transistors verbunden ist, eine zweite Diode über ihre Kathode mit dem Emitter des ersten Transistors und über ihre Anode mit dem Emitter des zweiten Transistors verbunden ist,
wobei die erste Wicklung (A1, A2, B1, B2, C1, C2) und die zweite Wicklung (A3, A4, B3, B4, C3, C4) jeder Brücke einander im Stator diametral gegenüberliegen,
wobei jeder Transistor mit einer Freilaufdiode ausgestattet ist,
wobei die Brücken derart parallelgeschaltet sind, dass alle Kollektoren der ersten Transistoren zusammengeschaltet sind, während alle Emitter der zweiten Transistoren zusammengeschaltet sind,
wobei die Brücken außerdem zu einer Gleichspannungswandlerstufe (10) und einer Batterie (11) parallelgeschaltet sind,
wobei die Reluktanzmaschine wenigstens zwölf Zähne am Stator und wenigstens sechs Brücken umfasst,
wobei der Rotor symmetrisch ist,
**dadurch gekennzeichnet, dass**
jede Brücke einen besonderen Punkt (a, a', b, b', c, c') umfasst, der sich am Verbindungspunkt zwischen der ersten Wicklung und der zweiten Wicklung der Brücke befindet,
wobei die besonderen Punkte (a, a', b, b', c, c') der Brücken paarweise mit einem Verbinder (p1, p2, p3) verbunden sind, der geeignet ist, eine Phase eines Stromversorgungsnetzes aufzunehmen.

2. Batterieladegerät nach Anspruch 1, wobei die Reluktanzmaschine zwölf Wicklungen (A1, B1, C1, A2, B2, C2, A3, B3, C3, A4, B4, C4) am Stator und acht Rotorpole (r1, r2, r3, r4, r5, r6, r7, r8) umfasst, das Batterieladegerät sechs Brücken (1, 2, 3, 4, 5, 6) umfasst,
der Stator aufeinander folgend die erste Wicklung (A1) der ersten Brücke (1), die erste Wicklung (B1)
der dritten Brücke (3), die erste Wicklung (C1) der fünften Brücke (5), die erste Wicklung (A2) der zweiten Brücke (2), die erste Wicklung (B2) der vierten Brücke (4), die erste Wicklung (C2) der sechsten Brücke (6), die zweite Wicklung (A3) der ersten Brücke (1), die zweite Wicklung (B3) der dritten Brücke (3), die zweite Wicklung (C3) der fünften Brücke (5), die zweite Wicklung (A4) der zweiten Brücke (2), die zweite Wicklung (B4) der vierten Brücke (4) und die zweite Wicklung (C4) der sechsten Brücke (6) umfasst.

3. Batterieladegerät nach Anspruch 2, wobei, wenn das Batterieladegerät mit einem einphasigen Stromversorgungsnetz verbunden ist,
entweder die besonderen Punkte der ersten Brücke (1) und der zweiten Brücke (2), welche die Wicklungen aufweisen, die einer Konjunktionsposition bei diesem Ladevorgang entsprechen, mit der Phase des einphasigen Stromversorgungsnetzes verbunden sind,
wobei die besonderen Punkte der dritten Brücke (3) und der fünften Brücke (5) mit dem Nullleiter des einphasigen Stromversorgungsnetzes verbunden sind, oder die besonderen Punkte der ersten Brücke (1) und der zweiten Brücke (2), welche die Wicklungen aufweisen, die einer Konjunktionsposition bei diesem Ladevorgang entsprechen, mit der Phase des einphasigen Stromversorgungsnetzes verbunden sind, wobei die besonderen Punkte der vierten Brücke (3) und der sechsten Brücke (6) mit dem Nullleiter des einphasigen Stromversorgungsnetzes verbunden sind.

4. Batterieladegerät nach einem der Ansprüche 2 bis 3,
wobei eine erste Diode mit den Kollektoren der ersten Transistoren über ihre Kathode verbunden ist, und über ihre Anode mit der Kathode einer zweiten Diode, wobei die Anode der zweiten Diode mit den Emittern der zweiten Transistoren verbunden ist, **dadurch gekennzeichnet, dass**, wenn das Batterieladegerät mit einem einphasigen Stromversorgungsnetz verbunden ist, die Anode der ersten Diode und die Kathode der zweiten Diode mit dem Nullleiter des Stromversorgungsnetzes verbindbar sind, und
die besonderen Punkte der ersten Brücke (1) und der zweiten Brücke (2), welche die Wicklungen aufweisen, die einer Konjunktionsposition bei diesem Ladevorgang entsprechen, oder die besonderen Punkte der dritten Brücke (3) und der fünften Brücke (5) oder die besonderen Punkte der vierten Brücke (4) und der sechsten Brücke (6) mit der Phase des einphasigen Stromversorgungsnetzes verbunden sind.

5. Batterieladegerät nach einem der Ansprüche 2 bis 4,
wobei, wenn das Batterieladegerät mit einem dreiphasigen Stromversorgungsnetz verbunden ist, entweder die besonderen Punkte der ersten Brücke (1) und der zweiten Brücke (2), welche die Wicklungen aufweisen, die einer Konjunktionsposition bei diesem Ladevorgang entsprechen, mit der ersten Phase des Stromversorgungsnetzes verbunden sind, wobei die besonderen Punkte der dritten Brücke (3) und der fünften Brücke (5) mit der zweiten Phase des Stromversorgungsnetzes verbunden sind, wobei die besonderen Punkte der vierten Brücke (4) und der sechsten Brücke (6) mit der dritten Phase des Stromversorgungsnetzes verbunden sind,
oder die besonderen Punkte der ersten Brücke (1) und der zweiten Brücke (2), welche die Wicklungen aufweisen, die einer Konjunktionsposition bei diesem Ladevorgang entsprechen, mit der ersten Phase des Stromversorgungsnetzes verbunden sind, wobei die besonderen Punkte der dritten Brücke (3) und der sechsten Brücke (6) mit der zweiten Phase des Stromversorgungsnetzes verbunden sind, wobei die besonderen Punkte der vierten Brücke (4) und der fünften Brücke (5) mit der dritten Phase des Stromversorgungsnetzes verbunden sind.

6. Batterieladegerät nach einem der Ansprüche 2 bis 5,
wobei die Verbindung zwischen den besonderen Punkten der Brücken über einen Kurzschluss hergestellt wird.

7. Batterieladegerät nach einem der Ansprüche 2 bis 5,
wobei die Verbindung zwischen den besonderen Punkten der Brücken über einen Schalter hergestellt wird.

8. Batterieladegerät nach einem der Ansprüche 2 bis 5,
wobei die Verbindung zwischen den besonderen Punkten der Brücken über eine Clipsverbindung hergestellt wird.

9. Batterieladegerät nach einem der vorhergehenden Ansprüche, wobei die Transistoren der Brücken über eine unipolare Ansteuerung angesteuert werden.

10. Batterieladegerät nach einem der Ansprüche 1 bis 8,
wobei die Transistoren der Brücken über eine bipolare Ansteuerung angesteuert werden.

11. Verfahren zum Laden einer Batterie eines Kraftfahrzeugs, das mit einer elektrischen Maschine mit variabler Reluktanz mit doppelt ausgeprägten Polen ausgestattet ist, die von einer Batterie (11) gespeist wird, durch ein Ladegerät, wie in einem der Ansprüche 2 bis 10 beansprucht, **dadurch gekennzeichnet, dass** es die folgenden Schritte umfasst:
der Rotor wird in einer Konjunktionsposition positioniert, in welcher vier zueinander äquidistante Pole des Rotors so ausgerichtet sind, dass sie sich gegenüber vier ebenfalls zueinander äquidistanten Wicklungen des Stators befinden,
die besonderen Punkte (a, a', b, b', c, c') werden derart paarweise verbunden, dass die Resultierende der elektromagnetischen Kräfte, die durch die in den Wicklungen des Stators fließenden oder induzierten Ströme erzeugt werden, im Wesentlichen null ist, insbesondere in Abhängigkeit von dem Stromversorgungsnetz, so dass die auf den Rotor wirkenden tangentialen Kräfte null sind, und
die Transistoren werden angesteuert, um die Batterie zu laden.

## Claims

1. Battery charger for an electric or hybrid motor vehicle equipped with a dual-protuberance variable-reluctance electrical machine powered by a battery (11), the reluctance machine comprising windings (A1, B1, C1, A2, B2, C2, A3, B3, C3, A4, B4, C4) at the stator and rotor poles (r1, r2, r3, r4, r5, r6, r7, r8), the battery charger comprising bridges each comprising a first transistor linked in series via its emitter to one end of a first winding (A1, A2, B1, B2, C1, C2) of the reluctance machine, the other end of the first winding being connected to one end of a second winding (A3, A4, B3, B4, C3, C4) of the reluctance machine, the other end of the second winding being connected in series to the collector of a second transistor, a first diode being connected via its cathode to the collector of the first transistor and via its anode to the collector of the second transistor, a second diode is connected via its cathode to the emitter of the first transistor and via its anode to the emitter of the second transistor,
the first winding (A1, A2, B1, B2, C1, C2) and the second winding (A3, A4, B3, B4, C3, C4) of each bridge being diametrically opposite in the stator,
each transistor being equipped with a freewheeling diode,
the bridges being connected in parallel such that all of the collectors of the first transistors are connected together, whereas all of the emitters of the second transistors are connected together,
the bridges moreover being connected in parallel with a DC/DC conversion stage (10) and a battery (11),
the reluctance machine comprising at least twelve teeth at the stator, and at least six bridges, the rotor being symmetrical, **characterized in that**
each bridge comprises a noteworthy point (a, a', b, b', c, c') situated at the connection point between the first winding and the second winding of said bridge,
the noteworthy points (a, a', b, b', c, c') of the bridges being linked in pairs to a connector (p1, p2, p3) able to receive a phase of an electric power supply network.

2. Battery charger according to Claim 1, wherein the reluctance machine comprises twelve windings (A1, B1, C1, A2, B2, C2, A3, B3, C3, A4, B4, C4) at the stator and eight rotor poles (r1, r2, r3, r4, r5, r6, r7, r8), the battery charger comprises six bridges (1, 2, 3, 4, 5, 6),
the stator comprises, in succession, the first winding (A1) of the first bridge (1), the first winding (B1) of the third bridge (3), the first winding (C1) of the fifth bridge (5), the first winding (A2) of the second bridge (2), the first winding (B2) of the fourth bridge (4), the first winding (C2) of the sixth bridge (6), the second winding (A3) of the first bridge (1), the second winding (B3) of the third bridge (3), the second winding (C3) of the fifth bridge (5), the second winding (A4) of the second bridge (2), the second winding (B4) of the fourth bridge (4) and the second winding (C4) of the sixth bridge (6).

3. Battery charger according to Claim 2, wherein, when the battery charger is connected to a single-phase electric power supply network,
either the noteworthy points of the first bridge (1) and of the second bridge (2) including the windings that correspond to a conjunction position during this charging are connected to the phase of the single-phase electric power supply network, the noteworthy points of the third bridge (3) and of the fifth bridge (5) being connected to the neutral of the single-phase electric power supply circuit, or the noteworthy points of the first bridge (1) and of the second bridge (2) including the windings that correspond to a conjunction position during this charging are connected to the phase of the single-phase electric power supply network, the noteworthy points of the fourth bridge (3) and of the sixth bridge (6) being connected to the neutral of the single-phase electric power supply circuit.

4. Battery charger according to either one of Claims 2 and 3, wherein a first diode is connected to the collectors of the first transistors via its cathode and via its anode to the cathode of a second diode, the anode of the second diode being linked to the emitters of the second transistors, **characterized in that**, when the battery charger is connected to a single-phase electric power supply network, the anode of the first diode and the cathode of the second diode are able to be connected to the neutral of the electric power supply network, and
the noteworthy points of the first bridge (1) and of the second bridge (2) including the windings that correspond to a conjunction position during this charging or the noteworthy points of the third bridge (3) and of the fifth bridge (5) or the noteworthy points of the fourth bridge (4) and of the sixth bridge (6) are connected to the phase of the single-phase electric power supply network.

5. Battery charger according to any one of Claims 2 to 4, wherein, when the battery charger is connected to a three-phase electric power supply network,
either the noteworthy points of the first bridge (1) and of the second bridge (2) including the windings that correspond to a conjunction position during this charging are connected to the first phase of the electric power supply network, the noteworthy points of the third bridge (3) and of the fifth bridge (5) being connected to the second phase of the electric power supply network, the noteworthy points of the fourth bridge (4) and of the sixth bridge (6) being connected to the third phase of the electric power supply network,
or the noteworthy points of the first bridge (1) and of the second bridge (2) including the windings that correspond to a conjunction position during this charging are connected to the first phase of the electric power supply network, the noteworthy points of the third bridge (3) and of the sixth bridge (6) being connected to the second phase of the electric power supply network, the noteworthy points of the fourth bridge (4) and of the fifth bridge (5) being connected to the third phase of the electric power supply network.

6. Battery charger according to any one of Claims 2 to 5, wherein the connection between the noteworthy points of the bridges is formed by way of a short circuit.

7. Battery charger according to any one of Claims 2 to 5, wherein the connection between the noteworthy points of the bridges is formed by way of a switch.

8. Battery charger according to any one of Claims 2 to 5, wherein the connection between the noteworthy points of the bridges is formed by way of a snap-in terminal.

9. Battery charger according to any one of the preceding claims, wherein the transistors of the bridges are controlled by way of a unipolar control system.

10. Battery charger according to any one of Claims 1 to 8, wherein the transistors of the bridges are controlled by way of a bipolar control system.

11. Method for charging a battery of a motor vehicle equipped with a dual-protuberance variable-reluctance electrical machine powered by a battery (11) via a charger according to any one of Claims 2 to 10, **characterized in that** it comprises the following steps:
the rotor is positioned in a conjunction position in which four poles of the rotor, which poles are equidistant from one another, are aligned facing four windings of the stator, which windings are also equidistant from one another,
the noteworthy points (a, a', b, b', c, c') are connected in pairs such that the result of the electromagnetic forces generated by the currents flowing or induced in the windings of the stator is substantially zero, in particular depending on the electric power supply network, such that the tangential efforts on the rotor are zero, and
the transistors are controlled so as to charge the battery.
